# EUROPÄISCHE PATENTSCHRIFT

(11) **EP 1 057 931 B1**
(45) Veröffentlichungstag und Bekanntmachung des Hinweises auf die Patenterteilung: **20.10.2004**
(21) Anmeldenummer: 00107311.3
(22) Anmeldetag: 04.04.2000
(51) Int. Cl.: D21G 1/02

(54) **Elastische Walze und Verfahren zum Herstellen einer solchen**
Soft roll and process for making such a roll
Rouleau élastique et procédé de fabrication d' un tel rouleau

(30) Priorität: 02.06.1999 DE 19925421
(43) Veröffentlichungstag der Anmeldung: 06.12.2000
(73) Patentinhaber: Voith Paper Patent GmbH, 89522 Heidenheim (DE)
(72) Erfinder: Kärger, Jens Christian, Dr., 8405 Winterthur (CH); Vodermayer, Albert Maria, Dr., 8305 Dietlikon (CH)
(74) Vertreter: Manitz, Finsterwald & Partner

(56) Entgegenhaltungen:
- EP-A- 0 582 950
- WO-A-97/07281
- DE-U- 29 722 778
- FR-A- 2 407 292

## Beschreibung

Die vorliegende Erfindung betrifft eine Walze, insbesondere zum Glätten von Papierbahnen, und ein Verfahren zum Herstellen einer solchen Walze nach den Oberbegriffen der unabhängigen Ansprüche wie beispielsweise aus der FR-A-2407292 bekannt.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Nipfrequenz, das ist die Frequenz, mit der der Bezug komprimiert und wieder entlastet wird, erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittliche Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Zur Steuerung der Eigenschaften der elastischen Bezugsschicht, werden Füllstoffe und/oder Fasern in das Matrixmaterial eingebracht. Je nach Menge und physikalischer Eigenschaft dieser Füllstoffe bzw. der Fasern, werden die physikalischen Eigenschaften der elastischen Bezugsschicht von den Füllstoffen bzw. den Fasern dominiert bzw. beeinflußt.

In der WO-A-9707281 wird eine Walze zur Behandlung von Papierbahnen beschrieben, bei der auf einem zylindrischen Walzenkörper ein Bezug aus einem Weichmetall vorgesehen ist.

Aus der EP-A-582950 ist eine mit Kohlenstofffasern verstärkte Kunststoffwalze für Zwecke der Bahnführung bekannt. Bei der beschriebenen Walze ist auf dem Walzenkörper eine Außenschicht aus Kunstharz mit pulverförmigen Füllern zur Verbesserung des Abrasionsverhaltens angebracht.

Die DE-A-29722778 beschreibt eine Walze, bei der ein Walzengrundkörper mit einer Funktionsschicht beschichtet ist, wobei die Funktionsschicht aus alternierenden Lagen von Faserverstärkungen und unverstärkten Thermoplasten aufgebaut ist.

Es ist eine Aufgabe der vorliegenden Erfindung ein Verfahren zur Herstellung einer elastischen Walze der eingangs genannten Art sowie eine entsprechende Walze anzugeben, bei der die Gefahr des Auftretens von Hot-Spots verringert wird.

Der die Walze betreffende Teil der Aufgabe wird erfindungsgemäß ausgehend von einer Walze der eingangs genannten Art durch den kennzeichnenden Teil des Anspruchs 1 gelöst.

Durch die in das Matrixmaterial eingebrachten metallischen Füllstoffe wird die Wärmeleitfähigkeit der elastischen Bezugsschicht verbessert und die Dissipation im Vergleich beispielsweise zu Aramid- oder Glasfasern als Füllstoffe verringert. Aufgrund der erhöhten Wärmeleitfähigkeit kann die an kritischen Stellen auftretende Überhitzungswärme schneller abgeführt werden, so daß ein Überschreiten der kritischen Temperatur und dadurch ein Auftreten von Hot-Spots verhindert wird. Dabei ist durch die hohe Wärmeleitfähigkeit eines metallischen Füllstoffes eine besonders schnelle Abführung überschüssiger Wärme beispielsweise in Richtung des Walzenkerns möglich.

Während das elastische Matrixmaterial, das üblicherweise aus Harz besteht, eine sehr schlechte Wärmeleitfähigkeit besitzt und somit punktuell auftretende Überhitzungsstellen praktisch eingekapselt sind, besitzen die metallischen Füllstoffe eine gegenüber dem Matrixmaterial extrem erhöhte Wärmeleitfähigkeit, so daß die schlechte Wärmeleitfähigkeit des Matrixmaterials durch die metallischen Füllstoffe praktisch vollständig kompensiert wird.

Da darüber hinaus der Wärmeausdehnungskoeffizient der metallischen Füllstoffe kleiner als der Wärmeausdehnungskoeffizient des Matrixmaterials ist, wird erreicht, daß der Gesamtwärmeausdehnungskoeffizient der Bezugsschicht ebenfalls kleiner ist als der des Matrixmaterials. Insbesondere kann durch Wahl eines geeigneten Metalles für die Füllstoffe der Gesamtwärmeausdehnungskoeffizient der Bezugsschicht an den Wärmeausdehnungskoeffizienten des Walzenkerns angepaßt werden. Auf diese Weise werden die bei einer Erhitzung der Walze auftretenden Längsspannungen zwischen der Bezugsschicht und dem Walzenkerns verringert und können im optimalen Fall völlig kompensiert werden. Durch diese Verringerung bzw. Verhinderung der Längsspannungen wird gleichzeitig die Gefahr des Auftretens von Hot-Spots bzw. des Ablösens der Bezugsschicht weiter verringert.

Nach einer nicht beanspruchten Ausführungsform ist zumindest ein Teil der metallischen Füllstoffe als Metallschaum ausgebildet. Dabei ist der Metallschaum mit dem elastischen Matrixmaterial getränkt bzw. gefüllt.

Durch die Verwendung eines Metallschaums als metallischer Füllstoff ist eine besonderes gleichmäßige Verteilung der durch das metallische Material vorgegebenen Eigenschaften der elastischen Bezugsschicht gegeben. Durch das Ausfüllen der in dem Metallschaum vorhandenen Poren mit elastischem Matrixmaterial wird eine besondere gleichmäßige Vermischung von Matrixmaterial und Metallschaum erreicht, so daß die elastische Bezugsschicht sehr homogene physikalische Eigenschaften besitzt.

Metallschaum und Matrixmaterial können dabei bereits vor Aufbringen auf den Walzenkern miteinander vermischt werden. Es ist jedoch auch möglich, zunächst den Metallschaum auf den Walzenkern aufzubringen, beispielsweise aufzusprühen und in einem nachfolgenden Verfahrensschritt das elastische Matrixmaterial in den Metallschaum einzubringen.

Nach einer weiteren bevorzugten Ausführungsform der Erfindung ist zumindest ein Teil der metallischen Füllstoffe als Metallpulver, insbesondere als Nickelpulver oder als Ketten von Nickelpulver ausgebildet. Dabei kann das Metallpulver kleinkörnig ausgebildet sein, insbesondere Korngrößen von zwischen ca. 5 bis 50 µm, bevorzugt von zwischen ca. 10 bis 20 µm besitzen.

Sowohl bei einer Ausbildung als Metallschaum als auch als Metallpulver ist eine sehr gleichmäßige Verteilung der metallischen Füllstoffe über das gesamte Volumen des Matrixmaterials und damit der elastischen Bezugsschicht möglich. Insbesondere eine gleichmäßige Verteilung in radialer Richtung gewährleistet, daß die innerhalb der elastischen Bezugsschicht an einem Hot-Spot auftretende Hitze in Richtung des Walzenkerns und anschließend über diesen beispielsweise in axialer Richtung abgeführt werden kann. Dabei ist es vorteilhaft, wenn sich die metallischen Füllstoffe in radialer Richtung ohne wesentliche Unterbrechung bis zur Oberfläche des Walzenkerns hin erstrecken.

Nach einer weiteren vorteilhaften Ausführungsform der Erfindung ist zumindest ein Teil der metallischen Füllstoffe als Metallfasern oder als Metallrovings ausgebildet. Die metallischen Füllstoffe können auch zumindest teilweise als metallbeschichtete Fasern und metallbeschichtete Rovings ausgebildet sein. In diesem Fall bestehen die Fasern oder Rovings vorteilhaft aus Kohlenstoff und/oder Glas.

Auch bei einer Ausbildung der metallischen Füllstoffe als Metallfasern oder -rovings bzw. metallbeschichtete Fasern oder metallbeschichtete Rovings werden der elastischen Bezugsschicht die physikalischen Eigenschaften des verwendeten Metall aufgeprägt. So besitzt die elastische Bezugsschicht auch in diesen Fällen eine gegenüber einer Reinharzschicht deutlich erhöhte Wärmeleitfähigkeit sowie einen verringerten Wärmeausdehnungskoeffizienten.

Durch eine faserige Ausbildung der Füllstoffe wird erreicht, daß jeweils entlang der Faser abhängig von deren Länge ein ununterbrochener Wärmeleitungspfad erzeugt wird. Je nach Ausrichtung der Fasern kann dabei die bevorzugte Richtung der Wärmeleitung in radialer oder in axialer Richtung oder, bei statistisch verteilter Faserausrichtung, eine gleichmäßige Verteilung der Wärme in allen Richtungen erreicht werden.

Während bei der Verwendung von Metallpulver oder Fasern die Elastizität des Matrixmaterials für die Gesamtelastizität der Bezugsschicht weiterhin eine wesentliche Rolle spielt, ist bei der Verwendung eines Metallschaums die Elastizität der Bezugsschicht stärker von dem Metallschaum bestimmt. Es ist daher vorteilhaft einen elastischen Metallschaum zu verwenden, damit die Bezugsschicht insgesamt weiterhin die erforderliche Elastizität besitzt.

Zusätzlich zu den metallischen Füllstoffen können in dem Matrixmaterial weitere Füllstoffe, insbesondere in Form von Fasern, beispielsweise Kohlestoff und/oder Glasfasern, vorgesehen sein. Diese weiteren Fasern sowie die metallischen bzw. metallbeschichteten Fasern oder Rovings können vorteilhaft in einer Faserlage oder in radial aufeinanderfolgenden Faserlagen angeordnet sein. Insbesondere bei Anordnung von mehreren Faserlagen können die Eigenschaften der Bezugsschicht, beispielsweise deren Elastizität, durch die Anzahl der Faserlagen und den Abstand zwischen den einzelnen Faserlagen bestimmt werden. Es ist auch möglich, die Abstände zwischen den Faserlagen in radialer Richtung zu variieren, insbesondere in radialer Richtung nach außen zu erhöhen, um somit beispielsweise an der Oberfläche eine höhere Elastizität und im Bereich der Oberfläche des Walzenkerns eine an diesen angepaßte Wärmeleitfähigkeit und Wärmeausdehnungskoeffizienten der Bezugsschicht zu erreichen.

Die metallbeschichteten Fasern bzw. Rovings können dadurch erzeugt werden, daß sie vor dem Aufwickeln auf den Walzenkern mit Metall beschichtet werden, insbesondere durch ein Metallbad gezogen werden. Grundsätzlich ist es jedoch auch möglich, daß die Fasern oder die Rovings im wesentlichen trocken auf den Walzenkern aufgewickelt werden und während oder nach dem Aufwickeln mit dem Metall beschichtet und/oder mit Matrixmaterial beaufschlagt werden.

Zur Erzeugung einer glatten Oberfläche der Walze wird die Bezugsschicht nach dem Aufbringen und Trocknen vorteilhaft geschliffen. Dabei können die innerhalb der Bezugsschicht angeordneten metallischen Füllstoffe, wenn sie sich bis nahe an die Oberfläche der Bezugsschicht erstrecken, durch das Schleifen freigelegt werden. Dies ist insbesondere dann vorteilhaft, wenn die Oberfläche des Matrixmaterials zusätzlich zum Erzeugen einer extrem glatten Oberfläche mit Metall beschichtet ist, da die an der Oberfläche des elastischen Matrixmaterials austretenden metallischen Füllstoffe sehr gute Verankerungspunkte für die außenliegende Metallbeschichtung bilden.

Nach einer weiteren bevorzugten Ausführungsform der Erfindung umfaßt die Bezugsschicht eine radial außenliegende Funktionsschicht und eine radial innenliegende Verbindungsschicht zum Verbinden der Funktionsschicht mit dem Walzenkern. Die metallischen Füllstoffe können zumindest in der Funktionsschicht, zumindest in der Verbindungsschicht oder in beiden Schichten angeordnet sein. Je nach Ausbildung der metallischen Füllstoffe sowie nach dem jeweiligen Mengenanteil innerhalb der Schichten werden die physikalischen Eigenschaften der Schichten durch die metallischen Füllstoffe mehr oder weniger bestimmt.

Die Verwendung von Nickel für die metallischen Füllstoffe ist vorteilhaft, da Nickel eine sehr gute Verbindung mit dem üblicherweise als Matrixmaterial verwendeten Harz eingeht.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: einen Teillängsschnitt durch eine Walze mit elastischer Bezugsschicht,
- Fig. 2 bis 4: Ausführungsformen erfindungsgemäßer Walzen mit elastischer Bezugsschicht,
- Fig. 5: eine schematische Querschnittsdarstellung einer Vorrichtung zum Separieren von Fasern in Rovings und
- Fig. 6: eine schematische Darstellung einer erfindungsgemäßen Walze während ihrer Herstellung.

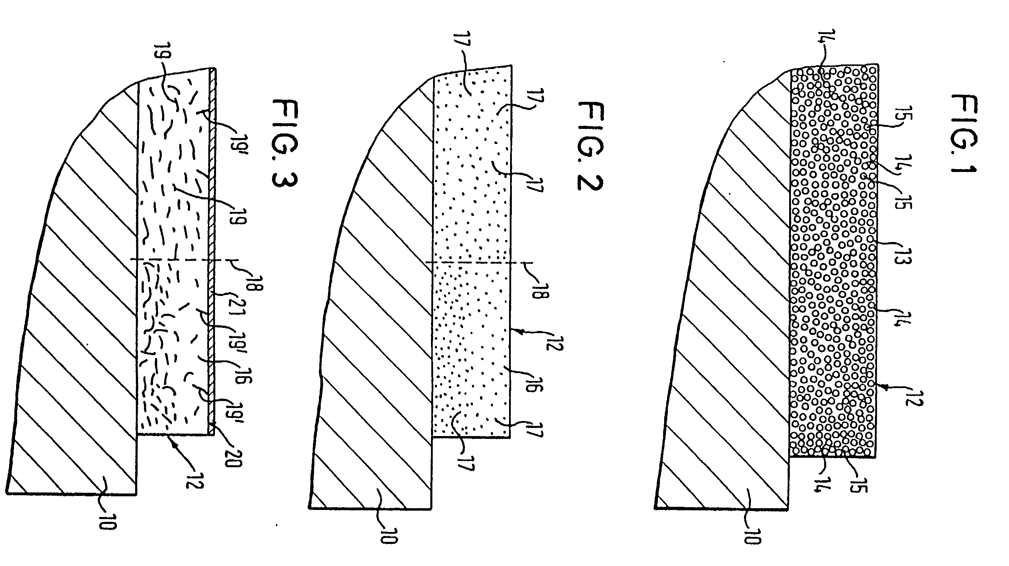

Fig. 1 zeigt einen Teil eines in Längsrichtung geschnittenen, beispielsweise aus Stahl oder Hartguß bestehenden Walzenkerns 10, der an seiner Außenseite mit einer ebenfalls geschnitten dargestellten elastischen Bezugsschicht 12 versehen ist.

Die Bezugsschicht 12 besteht aus einem elastischen Metallschaum 13, der eine Vielzahl von Poren 14 aufweist. Die Poren 14 sind mit einem elastischen Matrixmaterial 15 gefüllt, das beispielsweise aus einer Harz-Härter-Kombination besteht. Durch die Kombination des elastischen Metallschaums 13 mit dem elastischen Matrixmaterial 15 erhält die Bezugsschicht 12 ihre erforderlich Gesamtelastizität.

Da der Metallschaum 13 eine sehr gute Wärmeleitfähigkeit besitzt, kann die im Betrieb aufgrund von Walkarbeit auftretende Wärme und insbesondere an Überhitzungsstellen innerhalb der Bezugsschicht 12 auftretenden Kristallisierungspunkten sehr schnell in Richtung des Walzenkerns 10 und anschließend über diesen entweder in radialer oder in axialer Richtung abgeführt werden. Hierbei ist bei Verwendung des Metallschaums 13 vorteilhaft, daß praktisch über die gesamte radiale und axiale Ausdehnung der Bezugsschicht 12 zwischen den Poren 14 metallische Verbindungswege existieren, so daß eine schnelle und ungehinderte Ableitung der unerwünschten Hitze gewährleistet ist.

Weiterhin wird der Wärmeausdehnungskoeffizient der Bezugsschicht 12 überwiegend von dem Wärmeausdehnungskoeffizienten des Metallschaums 13 bestimmt, der bei geeigneter Metallwahl in etwa dem Wärmeausdehnungskoeffizienten des Walzenkerns 10 entspricht. Auf diese Weise werden Längsspannungen an der Verbindungsstelle zwischen dem Walzenkern 10 und der Bezugsschicht 12, die aufgrund der im Betrieb auftretenden Hitze entstehen können, vermieden.

Bei dem in Figur 2 dargestellten Ausführungsbeispiel wird die Bezugsschicht 12 von einem elastischen Matrixmaterial 16 gebildet, in das metaltallische Füllstoffe 17 in Form von Metallpulver, beispielsweise Nickelpulver, eingebracht sind. Die die metallischen Füllstoffe 17 bildenden Pulverteilchen können dabei, wie in der linken Hälfte der Figur 2 schematisch dargestellt, im wesentlichen gleichmäßig über die Bezugsschicht 12 verteilt sein oder, wie in der rechten, durch eine gestrichelte Linie 18 abgetrennten Hälfte der Figur 2 dargestellt, so innerhalb der Bezugsschicht 12 verteilt sein, daß die Konzentration der metallischen Füllstoffe 17 radial nach außen abnimmt.

Durch eine solche Verteilung der metallischen Füllstoffe 17 besitzt die Bezugsschicht 12 in ihrem radial innengelegenen Bereich einen Gesamtwärmeausdehnungskoeffizienten, der von den metallischen Füllstoffen 17 dominiert ist, während im radial außen gelegenen Bereich der Wärmeausdehnungskoeffizient der Bezugsschicht 12 überwiegend von dem Wärmeausdehnungskoeffizienten des elastischen Matrixmaterials 16 bestimmt wird. Auf diese Weise besitzt die Bezugsschicht 12 in ihrem radial außen gelegenen Bereich ein höhere Elastizität und gleichzeitig werden die im Verbindungsbereich zwischen der Bezugsschicht 12 und dem Walzenkern 10 aufgrund der unterschiedlichen Wärmeausdehnungskoeffizienten auf tretenden Längsspannungen verringert.

Bei dem Ausführungsbeispiel gemäß Figur 3 bestehen die metallischen Füllstoffe aus Fasern 19, wobei diese Fasern aus Metall ausgebildet und/oder lediglich mit Metall beschichtet sein können.

Während in der linke Hälfte der Figur 3 die Fasern 19 wiederum gleichmäßig innerhalb der Bezugsschicht 12 verteilt angeordnet sind, ist in der durch die gestrichelte Linie 18 getrennten rechten Hälfte eine Verteilung der Fasern 19 dargestellt, die ähnlich der Verteilung der Pulverteilchen 17 in Figur 2 radial nach außen abnimmt. Dadurch werden die bereits zu der Figur 2 beschriebenen Vorteile erzielt.

Die Ausbildung der metallischen Füllstoffe als Fasern 19 hat den Vorteil, daß je nach Länge der Fasern 19 jeweils die im Inneren der Bezugsschicht 12 entstehende Hitze ohne Unterbrechung durch das elastische Matrixmaterial 16 schnell abgeführt werden kann. Zusätzlich kann durch die Fasern 19 eine höhere Steifigkeit der Bezugsschicht 12 erzielt werden.

An der Oberfläche 20 der Bezugsschicht 12 ist bei dem Beispiel gemäß Figur 3 eine Metallschicht 21 vorgesehen, durch die eine sehr glatte Oberfläche der Walze erzielt werden kann. Die Metallschicht kann dabei eine Dicke von beispielsweise 10 µm besitzen, so daß aufgrund dieser geringen Dicke die Elastizität der Walzenbeschichtung erhalten bleibt.

Ein Teil der Fasern 19, die in der Figur 3 mit 19' bezeichnet sind, erstrekken sich bis zur Oberfläche 20 der Bezugsschicht 12 und treten somit in Kontakt mit der Metallschicht 21. Dadurch wird eine besonders sichere Verbindung der Metallschicht 21 mit der Bezugsschicht 12 erzielt.

In ähnlicher Weise können auch die Ausführungsformen gemäß den Figuren 1, 2 und 4 mit einer Metallschicht 21 versehen sein.

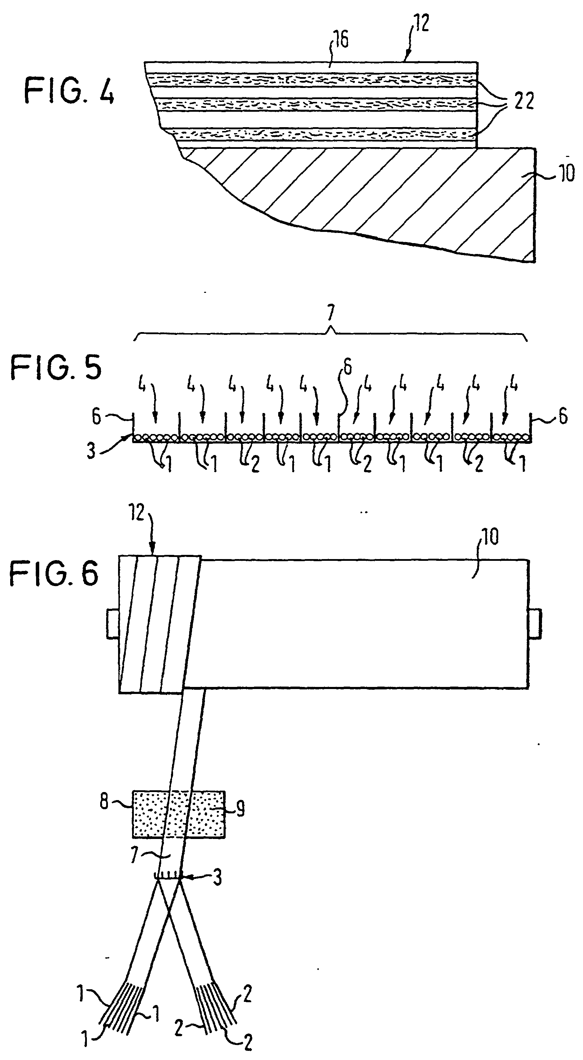

Bei der in Figur 4 dargestellten Ausführungsform sind in dem elastischen Matrixmaterial 16 der Bezugsschicht 12 Faserlagen 22 eingebettet, die im wesentlichen konzentrisch zu dem Walzenkern 10 verlaufen. Diese Faserlagen 22 entstehen beispielsweise dann, wenn die Bezugsschicht 12 in der in Figur 6 dargestellten Weise durch Wickeln von Faserrovings 4 erzeugt wird.

Figur 5 zeigt eine Vielzahl von im Querschnitt dargestellten Fasern 1, die als metallische Fasern oder als Metall beschichtete Fasern ausgebildet sein können und durch eine kamm- oder rechenartige Sammeleinheit 3 jeweils zu einschichtigen Faserbündeln, den Faserrovings 4 zusammengefaßt werden.

Jeweils ein Faserroving 4 ist von dem nächstliegenden Roving 4 durch einen Zahn 6 der Sammeleinheit getrennt, so daß eine gleichmäßige Verteilung der Fasern 1 innerhalb des durch die Faserrovings 4 gebildeten Rovingbandes 7 gewährleistet wird.

Während in Figur 5 die Rovings 4 ideal als einschichtige Lagen dargestellt sind, besteht ein Roving in der Praxis aus einer Vielzahl von Faserlagen, von denen jede Einzelfaser einen Durchmesser von ca. 8 bis 12 µm und ein Roving eine Dicke von ca. 0,1 bis 0,3 mm besitzt. Wesentlich ist lediglich, daß die Breite eines Rovings 4 im Verhältnis zu seiner Dicke deutlich größer ist, so daß er annähernd einen einschichtigen Aufbau besitzt.

In Figur 6 ist dargestellt, wie die Fasern 1 sowie weitere Fasern 2 über die Sammeleinheit 3 geführt und zu dem Rovingband 7 zusammengefaßt werden, woraufhin sie durch eine schematisch dargestellte Beschichtungsvorrichtung 8 geführt werden. Eine solche Beschichtungsvorrichtung 8 ist dann erforderlich, wenn die Fasern 1, 2 nicht selbst aus Metall bestehen, sondern nur die Basis für mit Metall zu beschichtende Fasern bilden. Beispielsweise können die Fasern 1, 2 aus Kohlenstoff, Glas, Aramid oder sonstigen geeigneten Materialen bestehen. In der Beschichtungsvorrichtung 8 werden die einzelnen Rovings 4 mit flüssigem Metall 9 beschichtet, so daß die Rovings 4 vollständig mit Metall ummantelt sind. In ähnlicher Weise kann das Rovingband 7 anschließend durch ein nicht dargestelltes Matrixbad gezogen werden, so daß die metallbeschichteten Fasern letztlich vollständig in das Matrixmaterial eingebettet sind.

Das beschichtete und vollständig mit dem Matrixmaterial umgebene Rovingband 7 wird anschließend auf den Walzenkern 10 Stoß an Stoß aufgewickelt, so daß nach einem Wickeldurchgang über die gesamte Länge des Walzenkerns 10 dieser vollständig mit einer Rovinglagen beschichtet ist. Dieser Wickelvorgang kann mehrere Male wiederholt werden, bis eine Bezugsschicht 12 mit einer Dicke von beispielsweise 3 bis 20 mm erzeugt ist.

Anschließend kann die Bezugsschicht 12 zum Erzielen einer glatten Oberfläche geschliffen werden oder, wie es in Figur 3 angedeutet ist, mit einer Metallschicht 21 versehen werden.

### Bezugszeichenliste

- 1: Fasern
- 2: Fasern
- 3: Sammeleinheit
- 4: Faserroving
- 6: Zahn
- 7: Rovingband
- 8: Beschichtungsvorrichtung
- 9: Metallbad
- 10: Walzenkern
- 12: Bezugsschicht
- 13: Metallschaum
- 14: Poren
- 15: elastisches Matrixmaterial
- 16: elastisches Matrixmaterial
- 17: metallische Füllstoffe
- 18: gestrichelte Linie
- 19, 19': Fasern
- 20: Oberfläche
- 21: Metallschicht
- 22: Faserlagen

## Patentansprüche

1. Walze, insbesondere zum Glätten von Papierbahnen, mit einem insbesondere aus Metall bestehenden harten Walzenkern (10), der an seiner Außenseite mit einer elastischen Bezugsschicht (12) versehen ist, die aus einem elastischen Matrixmaterial (15, 16) und in das Matrixmaterial (15, 16) eingebetteten Füllstoffen (1, 2, 13, 17, 19) besteht,
wobei zumindest ein Teil der Füllstoffe (1, 2, 13, 17, 19) als metallische Füllstoffe ausgebildet ist, die zumindest bereichsweise aus Metall bestehen,
**dadurch gekennzeichnet,**
**dass** die Konzentration der metallischen Füllstoffe (1, 2, 13, 17, 19) radial nach außen abnimmt.

2. Walze nach Anspruch 1,
**dadurch gekennzeichnet,**
**daß** zumindest ein Teil der metallischen Füllstoffe als Metallpulver (17), insbesondere als Nickelpulver oder als Ketten von Nickelpulver ausgebildet ist, wobei bevorzugt das Metallpulver (17) kleinkörnig ausgebildet ist, insbesondere Korngrößen von zwischen ca. 5 bis 50 µm, bevorzugt von zwischen ca. 10 bis 20 µm besitzt.

3. Walze nach einem der vorhergehenden Ansprüche,
**dadurch gekennzeichnet,**
**daß** zumindest ein Teil der metallischen Füllstoffe als Metallfasern (1, 2, 19) oder als Metallrovings (4) ausgebildet ist und/oder
**daß** zumindest ein Teil der metallischen Füllstoffe als metallbeschichtete Fasern (1, 2, 19) oder metallbeschichtete Rovings (4) ausgebildet ist, wobei bevorzugt die Fasern (1, 2, 19) oder Rovings (4) aus Kohlenstoff und/oder aus Glas bestehen.

4. Walze nach Anspruch 3,
**dadurch gekennzeichnet,**
**daß** zumindest ein Teil, insbesondere ein überwiegender Teil der Fasern (1, 2, 19) in axialer Richtung ausgerichtet sind und/oder
**daß** zumindest ein Teil, insbesondere ein überwiegender Teil der Fasern (1, 2, 19) in radialer Richtung ausgerichtet sind und/oder
**daß** zumindest ein Teil, insbesondere ein überwiegender Teil der Fasern (1, 2, 19) statistisch verteilt ausgerichtet sind und/oder
**daß** die Fasern (1, 2) in einer Faserlage (22) oder in radial aufeinanderfolgenden Faserlagen (22) angeordnet sind.

5. Walze nach einem der vorhergehenden Ansprüche,
**dadurch gekennzeichnet,**
**daß** zumindest ein Teil der metallischen Füllstoffe (1, 2, 13, 17, 19) elastisch ausgebildet ist und/oder
**daß** zusätzlich zu den metallischen Füllstoffen (1, 2, 13, 17, 19) weitere Füllstoffe, insbesondere in Form von Fasern, beispielsweise Kohlenstoff- und/oder Glasfasern, in dem elastischen Matrixmaterial angeordnet sind, wobei bevorzugt die weiteren Füllstoffe aus Quarz und/oder PTFE bestehen.

6. Walze nach einem der vorhergehenden Ansprüche,
**dadurch gekennzeichnet,**
**daß** sich die metallischen Füllstoffe (1, 2, 13, 17, 19) bis zur Oberfläche (20) des elastischen Matrixmaterials (15, 16) erstrecken und insbesondere die Oberfläche (20) des elastischen Matrixmaterials (15, 16) durchstoßen und/oder
**daß** die Oberfläche (20) des Matrixmaterials (16) mit Metall (21) beschichtet ist.

7. Walze nach einem der vorhergehenden Ansprüche,
**dadurch gekennzeichnet,**
**daß** die Wärmeleitfähigkeit der metallischen Füllstoffe (1, 2, 13, 17, 19) deutlich höher ist als die des Matrixmaterials (15, 16) und/oder
**daß** sich ein Teil der metallischen Füllstoffe (1, 2, 13, 17, 19) radial nach innen bis zur Oberfläche des Walzenkerns (10) erstreckt und/oder
**daß** der Wärmeausdehnungskoeffizient der metallischen Füllstoffe (1, 2, 13, 17, 19) kleiner ist als der des Matrixmaterials (15, 16) und insbesondere im wesentlichen gleich dem Wärmeausdehnungskoeffizienten des Walzenkerns (10) ist.

8. Walze nach einem der vorhergehenden Ansprüche,
**dadurch gekennzeichnet,**
**daß** die Bezugsschicht (12) eine radial außenliegende Funktionsschicht und eine radial innenliegende Verbindungsschicht zum Verbinden der Funktionsschicht mit dem Walzenkern (10) umfaßt und
**daß** die metallischen Füllstoffe (1, 2, 13, 17, 19) zumindest in der Funktionsschicht angeordnet sind.

9. Walze nach einem der vorhergehenden Ansprüche,
**dadurch gekennzeichnet,**
**daß** das Matrixmaterial (15, 16) ein Kunststoff, insbesondere ein Duroplast oder ein Thermoplast ist und/oder
**daß** das Matrixmaterial (15, 16) aus einer Harz/Härter-Kombination besteht.

10. Verfahren zum Herstellen einer elastischen Walze mit einem insbesondere aus Metall bestehenden harten Walzenkem und einer aus einem elastischen Matrixmaterial bestehenden elastischen Bezugsschicht, insbesondere zum Herstellen einer Walze nach einem der vorherigen Ansprüche,
wobei in das elastische Matrixmaterial zumindest ein metallischer Füllstoff eingebracht wird,
**dadurch gekennzeichnet,**
**dass** die Konzentration der metallischen Füllstoffe (1, 2, 13, 17, 19) radial nach außen abnimmt.

11. Verfahren nach Anspruch 10,
**dadurch gekennzeichnet,**
**daß** zur Erzeugung der Bezugsschicht zumindest ein aus einer Vielzahl von Metallfasern oder von metallbeschichteten Fasern bestehendes Faserbündel, insbesondere in mehreren Faserlagen übereinander, auf den Walzenkern gewickelt wird, insbesondere daß das Faserbündel durch einen oder mehrere Faserroving und/oder durch ein Faservlies gebildet wird, wobei ein Roving jeweils aus einer Vielzahl von nebeneinanderliegenden Fasern der gleichen Art besteht.

12. Verfahren nach Anspruch 11,
**dadurch gekennzeichnet,**
**daß** das Faserbündel durch ein Faservlies gebildet wird und/oder
**daß** das Faserbündel vor dem Aufwickeln auf den Walzenkern mit dem Matrixmaterial umgeben wird, insbesondere durch ein Matrixbad gezogen wird, und/oder
**daß** das Faserbündel oder die einzelnen Fasern vor dem Aufwickeln auf den Walzenkern mit Metall beschichtet werden, insbesondere durch ein Metallbad gezogen werden, oder daß das Faserbündel oder die Fasern im wesentlichen trocken auf den Walzenkern aufgewickelt werden und während oder nach dem Aufwickeln mit dem Metall beschichtet und/oder mit dem Matrixmaterial beaufschlagt werden.

13. Verfahren nach Anspruch 11 oder 12,
**dadurch gekennzeichnet,**
**daß** als Fasern Glas- und/oder Kohlefasern verwendet werden.

## Claims

1. A roll, in particular for smoothing paper webs, having a hard roll core (10), in particular a hard roll core consisting of metal, which is provided at its outer side with an elastic covering layer (12) which consists of an elastic matrix material (15, 16) and fillers (1, 2, 13, 17, 19) embedded in the matrix material (15, 16), wherein at least some of the fillers (1, 2, 13, 17, 19) are made as metallic fillers which consist of metal at least regionally,
**characterized in that** the concentration of the metallic fillers (1, 2, 13, 17, 19) reduces radially outwardly.

2. A roll in accordance with claim 1, **characterized in that** at least some of the metallic fillers are made as a metal powder (13), in particular as nickel powder or as chains of nickel powder, with the metallic powder (17) preferably being made with small grains, in particular with grain sizes of between approximately 5 to 50 µm, preferably of between approximately 10 to 20 µm.

3. A roll in accordance with any one of the preceding claims, **characterized in that** at least some of the metallic fillers are made as metal fibers (1, 2, 19) or as metal rovings (4); and/or **in that** at least some of the metallic fillers are made as metal-coated fibers (1, 2, 19) or metal-coated rovings (4), with the fibers (1, 2, 19) or rovings (4) preferably consisting of carbon and/or of glass.

4. A roll in accordance with claim 3, **characterized in that** at least some of the fibers (1, 2, 19), in particular a predominant portion of the fibers (1, 2, 19), are aligned in the axial direction; and/or **in that** at least some of the fibers (1, 2, 19), in particular a predominant portion of the fibers (1, 2, 19), are aligned in the radial direction; and/or **in that** at least some of the fibers (1, 2, 19), in particular a predominant portion of the fibers (1, 2, 19), are aligned in statistical distribution: and/or **in that** the fibers (1, 2) are arranged in one fiber layer (22) or in radially sequential fiber layers (22).

5. A roll in accordance with any one of the preceding claims, **characterized in that** at least some of the metallic fillers (1, 2, 13, 17, 19) are elastic; and/or **in that**, in addition to the metallic fillers (1, 2, 13, 17, 19), further fillers, in particular in the form of fibers, for example, carbon and/or glass fibers, are arranged in the elastic matrix material, with the further fillers preferably consisting of quartz and/or PTFE.

6. A roll in accordance with any one of the preceding claims, **characterized in that** the metallic fillers (1, 2, 13, 17, 19) extend up to the surface (20) of the elastic matrix material (15, 16) and, in particular, penetrate the surface (20) of the elastic matrix material (15, 16); and/or **in that** the surface (20) of the matrix material (16) is coated with metal (21).

7. A roll in accordance with any one of the preceding claims, **characterized in that** the thermal conductivity of the metallic fillers (1, 2, 13, 17, 19) is considerably higher than that of the matrix material (15, 16); and/or **in that** some of the metallic fillers (1, 2, 13, 17, 19) extend radially inwardly up to the surface of the roll core (10); and/or **in that** the thermal coefficient of expansion of the metallic fillers (1, 2, 13, 17, 19) is smaller than that of the matrix material (15, 16) and, in particular, is substantially the same as the thermal coefficient of expansion of the roll core (10).

8. A roll in accordance with any one of the preceding claims, **characterized in that** the covering layer (12) has a radially outwardly disposed functional layer and a radially inwardly disposed connecting layer for connecting the functional layer to the roll core (10); and **in that** the metallic fillers (1, 2, 13, 17, 19) are arranged at least in the functional layer.

9. A roll in accordance with any one of the preceding claims, **characterized in that** the matrix material (15, 16) is a plastic, in particular a thermosetting plastic or a thermoplastic; and/or **in that** the matrix material (15, 16) consists of a resin/hardener combination.

10. A method for producing an elastic roll having a hard roll core, in particular a hard roll core consisting of metal, and an elastic covering layer consisting of an elastic matrix material, in particular for manufacturing a roll in accordance with any one of the preceding claims, wherein at least one metallic filler is introduced into the elastic matrix material,
**characterized in that** the concentration of the metallic filters (1, 2, 13, 17, 19) reduces radially outwardly.

11. A method in accordance with claim 10, **characterized in that**, for producing the covering layer, at least one fiber bundle consisting of a plurality of metal fibers or metal-coated fibers, is wound onto the roll core, in particular in a plurality of several superimposed fiber layers; in particular **in that** the fiber bundle is formed by one or more fiber rovings and/or by a fiber fleece, wherein each roving consists of a plurality of adjacently disposed fibers of the same kind.

12. A method in accordance with claim 11, **characterized in that** the fiber bundle is formed by a fiber fleece; and/or **in that** the fiber bundle is enveloped with the matrix material before being wound onto the roll core and is in particular drawn through a matrix bath; and/or **in that** the fiber bundle or the individual fibers are coated with metal, are in particular drawn through a metal bath, before being wound onto the roll core; or **in that** the fiber bundle or the fibers are wound onto the roll core in a substantially dry state and are coated with the metal and/or loaded with the matrix material during or after winding.

13. A method in accordance with claim 11 or claim 12, **characterized in that** glass and/or carbon fibers are used as the fibers.

## Revendications

1. Rouleau destiné notamment au lissage de bandes de papier, comportant un noyau de rouleau dur (10) constitué notamment de métal, dont la face extérieure est munie d'une couche de revêtement élastique (12), qui est constituée d'un matériau de matrice élastique (15, 16) et de matières de charge (1, 2, 13, 17, 19) insérées dans le matériau de matrice (15, 16),
une partie au moins des matières de charge (1, 2, 13, 17, 19) étant agencée en tant que matières de charge métalliques constituées de métal, au moins par zones,
**caractérisé en ce que**
la concentration des matières de charge métalliques (1, 2, 13, 17, 19) diminue radialement vers l'extérieur.

2. Rouleau selon la revendication 1,
**caractérisé en ce que**
une partie au moins des matières de charge métalliques est constituée de poudre métallique (17), notamment de poudre de nickel ou de chaînes de poudre de nickel, la poudre métallique (17) étant de préférence prévue à l'état finement granulé, et possédant notamment une granulométrie de l'ordre de 5 à 50 µm, de préférence de l'ordre de 10 à 20 µm.

3. Rouleau selon l'une des revendications précédentes,
**caractérisé en ce que**
une partie au moins des matières de charge métalliques est constituée de fibres métalliques (1, 2, 19) ou de stratifils métalliques (4), et/ou
une partie au moins des matières de charge métalliques est constituée de fibres (1, 2, 19) revêtues de métal ou de stratifils (4) revêtus de métal, les fibres (1, 2, 19) ou les stratifils (4) étant de préférence en carbone et/ou en verre.

4. Rouleau selon la revendication 3,
**caractérisé en ce que**
une partie au moins, notamment une partie prépondérante, des fibres (1, 2, 19) est orientée dans la direction axiale, et/ou
une partie au moins, notamment une partie prépondérante, des fibres (1, 2, 19) est orientée dans la direction radiale, et/ou
une partie au moins, notamment une partie prépondérante, des fibres (1, 2, 19) est orientée en étant répartie de façon statistique, et/ou
les fibres (1, 2) sont disposées en une couche de fibres (22) ou en couches de fibres (22) radialement successives.

5. Rouleau selon l'une quelconque des revendications précédentes,
**caractérisé en ce que**
une partie au moins des matières de charge métalliques (1, 2, 13, 17, 19) est agencée de façon élastique, et/ou
en plus des matières de charge métalliques (1, 2, 13, 17, 19), d'autres matières de charge sont disposées dans le matériau de matrice élastique, notamment sous la forme de fibres, par exemple de fibres de carbone et/ou de verre, les autres matières de charge étant de préférence en quartz et/ou en PTFE.

6. Rouleau selon l'une quelconque des revendications précédentes,
**caractérisé en ce que**
les matières de charge métalliques (1, 2, 13, 17, 19) s'étendent jusqu'à la surface (20) du matériau de matrice élastique (15, 16), et traversent notamment la surface (20) du matériau de matrice élastique (15, 16), et/ou
la surface (20) du matériau de matrice (16) est revêtue de métal (21).

7. Rouleau selon l'une quelconque des revendications précédentes,
**caractérisé en ce que**
la conductibilité thermique des matières de charge métalliques (1, 2, 13, 17, 19) est nettement supérieure à celle du matériau de matrice (15, 16), et/ou
une partie des matières de charge métalliques (1, 2, 13, 17, 19) s'étend radialement vers l'intérieur jusqu'à la surface du noyau de rouleau (10), et/ou
le coefficient de dilatation thermique des matières de charge métalliques (1, 2, 13, 17, 19) est inférieur à celui du matériau de matrice (15, 16), et est notamment pour l'essentiel identique au coefficient de dilatation thermique du noyau de rouleau (10).

8. Rouleau selon l'une quelconque des revendications précédentes,
**caractérisé en ce que**
la couche de revêtement (12) comporte une couche de fonction située radialement à l'extérieur, et une couche de liaison située radialement à l'intérieur destinée à relier la couche de fonction au noyau de rouleau (10), et les matières de charge métalliques (1, 2, 13, 17, 19) sont disposées au moins dans la couche de fonction.

9. Rouleau selon l'une quelconque des revendications précédentes,
**caractérisé en ce que**
le matériau de matrice (15, 16) est une matière plastique, notamment une résine thermodurcissable ou une matière thermoplastique, et/ou
le matériau de matrice (15, 16) est constitué d'une combinaison de résine / durcisseur.

10. Procédé de fabrication d'un rouleau élastique, comportant un noyau de rouleau dur constitué notamment de métal, et une couche de revêtement élastique constituée d'un matériau de matrice, destiné notamment à la fabrication d'un rouleau selon l'une quelconque des revendications précédentes,
au moins une matière de charge métallique étant introduite dans le matériau de matrice élastique,
**caractérisé en ce que**
la concentration des matières de charge métalliques (1, 2, 13, 17, 19) diminue radialement vers l'extérieur.

11. Procédé selon la revendication 10,
**caractérisé en ce que**,
pour la réalisation de la couche de revêtement, au moins un faisceau de fibres constitué d'une pluralité de fibres métalliques ou de fibres revêtues de métal est enroulé sur le noyau de rouleau, notamment en plusieurs couches de fibres superposées,
notamment le faisceau de fibres est constitué d'un ou de plusieurs stratifils de fibres et/ou d'un non-tissé de fibres, un stratifil étant respectivement constitué d'une pluralité de fibres de même nature situées les unes à côté des autres.

12. Procédé selon la revendication 11,
**caractérisé en ce que**
le faisceau de fibres est constitué d'un non-tissé de fibres, et/ou
avant l'enroulement sur le noyau de rouleau, le faisceau de fibres est entouré du matériau de matrice, notamment tiré à travers un bain de matrice, et/ou
avant l'enroulement sur le noyau de rouleau, le faisceau de fibres ou les fibres individuelles est/sont revêtu(es) de métal, notamment tiré(es) à travers un bain de métal, ou le faisceau de fibres ou les fibres est/sont enroulé(es) à l'état sensiblement sec sur le noyau de rouleau, et est/sont revêtu(es) du métal et/ou entouré(es) du matériau de matrice pendant ou après l'enroulement.

13. Procédé selon la revendication 11 ou 12,
**caractérisé en ce que**
des fibres de verre et/ou de carbone sont utilisées en tant que fibres.
